# EUROPEAN PATENT SPECIFICATION

(11) **EP 4 259 350 B1**
(45) Date of publication and mention of the grant of the patent: **15.07.2026**
(21) Application number: 21835422.3
(22) Date of filing: 07.12.2021
(51) Int. Cl.: B09B 3/00, C02F 1/02, C02F 103/00

(54) **PLANT AND PROCESS FOR THE TREATMENT OF MEDICINAL WASTE**
VORRICHTUNG UND VERFAHREN ZUR BEHANDLUNG VOM MEDIZINISCHEN ABFALL
DISPOSITIF ET PROCÉDÉ POUR LE TRAITEMENT DE DÉCHETS MÉDICAUX

(30) Priority: 09.12.2020 IT 202000030158
(43) Date of publication of application: 18.10.2023
(73) Proprietor: Newster System S.r.l., 47853 Cerasolo di Coriano (RN) (IT)
(72) Inventor: MAGRINI, Gianluca, 47838 Riccione (RN) (IT); TREVISSON, Laura, 47921 Rimini (RN) (IT); COPERTARO, Benedetta, 62019 Recanati (MC) (IT); CATAPANO, Enrico, 47923 Rimini (RN) (IT); PERICOLI, Marco, 47923 Rimini (RN) (IT); CASALBONI, Giorgio, 47921 Rimini (RN) (IT)
(74) Representative: Montebelli, Marco
(86) International application number: PCT/IT2021/050394
(87) International publication number: WO 2022/123610

(56) References cited:
- WO-A1-2006/008631
- BE-A6- 1 016 020
- JP-A- H04 235 781
- US-A- 6 139 793

## Description

### Technical Field

The present invention relates to a plant and a process for the treatment of medicinal waste.

### Background Art

Over the past 20 years, the hospital waste disposal market has been made subject to international standards to avoid exposing healthcare workers, waste managers and the community as a whole to the risk of infection, toxic effects and injury. Indeed, it is now accepted that drug-resistant microorganisms can spread in the environment due to the constant presence of active pharmaceutical ingredients in water and soil.

In terms of medical waste management more generally, the Stockholm Convention on Persistent Organic Pollutants (POPs) aims to eliminate or limit their production. These chemicals are produced and consequently released into the environment by waste incineration and other waste burning processes.

In some countries, the adoption of the Convention has led to the closure of all small and medium-scale medical waste incinerators unable to comply with the maximum permissible concentration limits for furans and dioxins in emissions and to the adoption of alternative disposal technologies such as inerting (mixing drugs, including their packaging, with liquid concrete) and encapsulation (mixing in agglomerated cement) and the subsequent disposal of that waste in large, very often unregulated, landfills.

In other countries, the adoption of the Convention has resulted in a drive towards incineration in large-scale plants that are capable of recovering energy and ensuring maximum environmental performance through costly gas emission abatement systems, although this does not eliminate the problem of daily waste handling.

The solutions described above concern only the treatment of solid waste posing a risk of infection and do not take into account waste from expired pharmaceuticals and cytotoxic residues.

Pharmaceutical and cytotoxic waste, if not properly managed, is highly hazardous to health and the environment.

In some countries, the disposal options for these types of waste are as follows:
1) Return of expired pharmaceutical and cytotoxic waste to the original supplier, including both expired but safely packaged pharmaceuticals and pharmaceuticals that are no longer needed. This option is complicated and involves the handling of waste.
2) Incineration at high temperatures using large, new-generation incinerators designed to completely destroy all substances contained in expired pharmaceutical and cytotoxic waste by reaching very high temperatures (1200°C). Conversely, an incineration process at lower temperatures could result in hazardous cytotoxic vapours being released into the atmosphere.
3) Incineration in rotary kilns designed to perform the thermal decomposition of chemical waste in foundries or cement kilns operating at temperatures above 850°C. While this disposal option is technologically feasible, it requires authorisation from the competent authorities for the treatment of this particular category of waste.

In countries where the incineration of pharmaceutical and cytotoxic waste in small-to-medium sized incinerators is strongly discouraged, the following disposal options are adopted:
1) Inerting and Encapsulation: expired pharmaceutical and cytotoxic waste is encapsulated within an inert matrix (e.g. liquid concrete), with this waste consequently disposed of in large, often unregulated, landfills;
2) Chemical degradation: hazardous waste is converted into a non-toxic compound through oxidation with potassium permanganate or sulphuric acid, denitration with hydrobromic acid, or reduction with nickel and aluminium. However, this disposal process is time-consuming and stocks of these chemicals must always be available and disposed of properly.
3) Chemical neutralization through oxidation with sodium hypochlorite.

Nevertheless, these solutions are not satisfactory as they involve the daily handling and management of waste, and do not eliminate the chemical risk related with the storage and release of the chemical compounds used for chemical degradation and neutralisation.

Indeed, these treatments carry the risk of releasing dioxins, furans and other toxic pollutants into the air and ash.

Furthermore, medicinal waste such as a pharmaceutical and cytotoxic waste cannot be howsoever recovered after treatment.

Relevant background art is represented by the US patent application No. US 6139793 A and by the International Application No. WO 2006/008631 A1.

### Disclosure of the Invention

The aim of the present invention is to produce a technology for the efficient treatment of medicinal waste.

A further purpose of the present invention is to recover medicinal waste and subsequently to transform the treated waste into a new product.

According to the present invention, a plant is provided with the features defined in Claim 1.

According to another aspect of the present invention, a process for the treatment of medicinal waste comprises the features of claim 8.

### Brief Description of the Drawings

Further advantages and features of the present invention will become more apparent from the detailed description below with reference to the accompanying drawings in which:
- Figure 1 schematically shows a front-view of the plant of the present invention before treatment begins;
- Figure 2 shows the plant in Figure 1 during treatment;
- Figure 3 schematically shows another front-view of the plant of the present invention before treatment begins;
- Figure 4 shows a perspective view of the plant in Figure 3 during treatment.

### Preferred Embodiments of the Invention

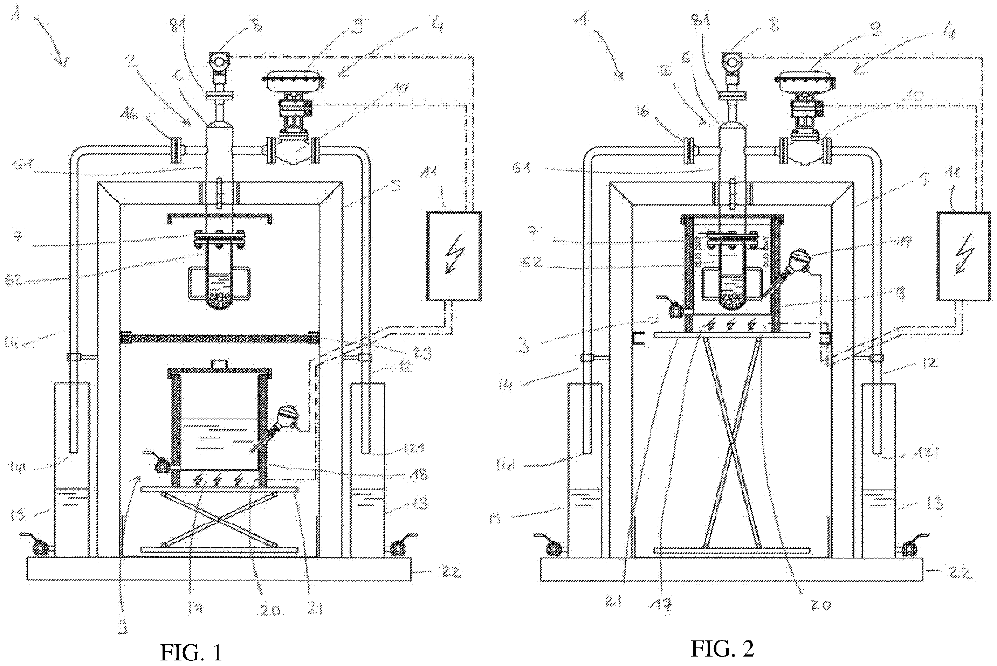

Figure 1 shows, with reference number 1, a plant for the treatment of medicinal waste of the present invention.

According to the invention, the plant 1 comprises at least one reaction cell 2 suitable for containing at least one liquid or liquid-diluted medicinal waste material; a heating system 3 suitable for uniformly heating at least one portion of the outer surface of the reaction cell 2; and a device 4 for controlling the pressure and temperature of the reaction cell 2, connected to the heating system 3.

The term "medicinal waste" means any type of medicinal substance that is no longer usable or is hazardous, including expired pharmaceuticals, cytotoxic products, vaccines, hyperimmune plasma, etc.

Heating takes place outside of the reaction cell. In particular, heating takes place outside of the external surface of the reaction cell 2.

Advantageously, heating takes place by immersing the reaction cell 2 at least partially in a heat transfer fluid. The heat transfer fluid is heated by transferring heat to the reaction cell 2 through the surface of the cell itself.

The figures show, by way of example, a vertically-developing plant.

The system 1 illustrated in the figures comprises a supporting structure 5 to which the reaction cell 2 is fixed.

The reaction cell 2 comprises a container 6 having at least one metal portion.

Advantageously, the reaction cell 2 comprises at least two interconnectable metal portions. In the illustrated embodiment, the lower portion 61, into which the medicinal waste to be treated is inserted, and the upper portion 62 each have a flange 7. The flanges 7 are fixed together so as to close the container 6. The two portions 61, 62 of the container 6 are metallic. The upper portion 62 of the reaction cell 2 is fixed to the supporting structure 5.

The control device 4 advantageously comprises at least one pressure indicator 8 and at least one depressurisation system 9.

The depressurisation system 9 preferably comprises at least one automatic ventilation or depressurisation valve 10.

The pressure indicator 8 comprises at least one pressure sensor 81. In the illustrated embodiment, the pressure sensor 81 comprises a membrane separator positioned at the upper portion 62 of the reaction cell 2.

The control device 4 comprises a control panel 11 to which the depressurisation system 9 and the pressure indicator 8 are connected.

The plant 1 advantageously comprises at least one first discharge pipe 12 connected to the reaction cell 2. The free end 121 of the first pipe 12 is arranged in at least one first vessel 13 containing a liquid, such as water.

Preferably, the upper portion 62 of the reaction cell 2 is connected to a first pipe 12 and a second discharge pipe 14.

The depressurisation system 9 is preferably arranged on the first pipe 12.

Advantageously, a safety system 16, for example comprising a rupture disk, is inserted on the second pipe 14.

The heating system 3 is arranged in the lower part of the supporting structure 5.

Preferably, the heating system 3 comprises at least one heating element 17, for example an electrical resistor, capable of heating a vessel 18 containing a heat transfer fluid, for example diathermic oil. A first temperature sensor 19 is arranged within the vessel 18. The first sensor 19 is connected to the control panel 11.

A second temperature sensor 20 is arranged at the heating element 17. The second sensor 20 is connected to the control panel 11.

A third temperature sensor (not shown) is arranged at the external surface of the reaction cell 2, in particular at the external surface of the lower portion 61. The third sensor is preferably connected to the control panel 11.

The heating system 3 is arranged on a vertically movable plane 21. In an advantageous embodiment, a safety containment tank 22 is arranged below the movable plane 21.

Preferably, a removable plane 23 is arranged between the heating system 3 and the reaction cell 2 to prevent the lower portion 61 of the reaction cell 2 from falling during opening. This removable plane 23 is advantageous in case of manual loading and removal of the contents of the reaction cell 2. Where these operations are automatic, the removable plane can be foregone.

The reaction cell 2 and the heating system 3 are initially separated by the removable plane 23. The removable plane 23 is then removed and the heating system 3 is moved vertically towards the top of the supporting structure 5 so that the reaction cell 2 is at least partially inserted into the fluid.

Once it reaches the metallic container 6 of the reaction cell 2, treatment begins.

The system 1 advantageously comprises an agitator 24 for moving the heat transfer fluid so as to increase the heat transfer, which thus occurs not only by conduction but also by convection.

Alternatively, the agitator can comprise a pump for circulating the heat transfer fluid.

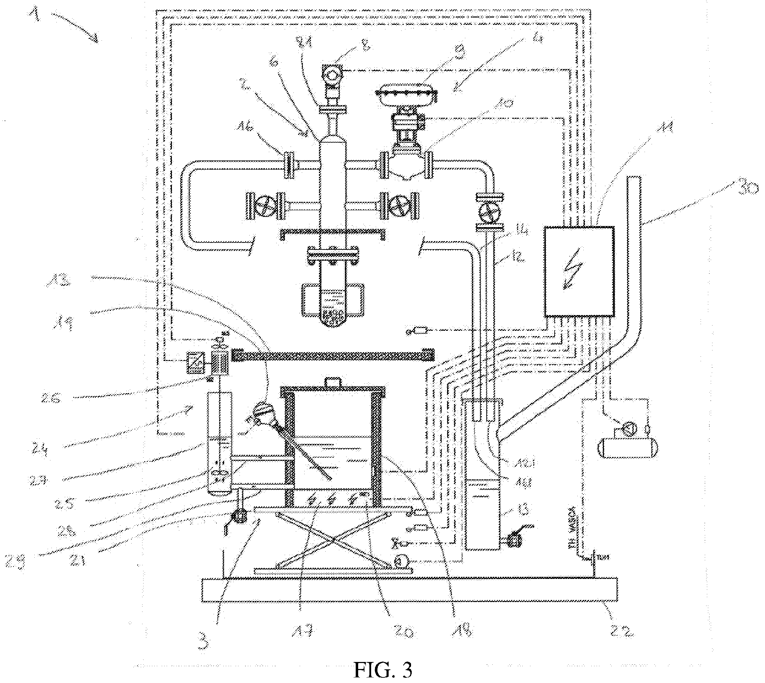

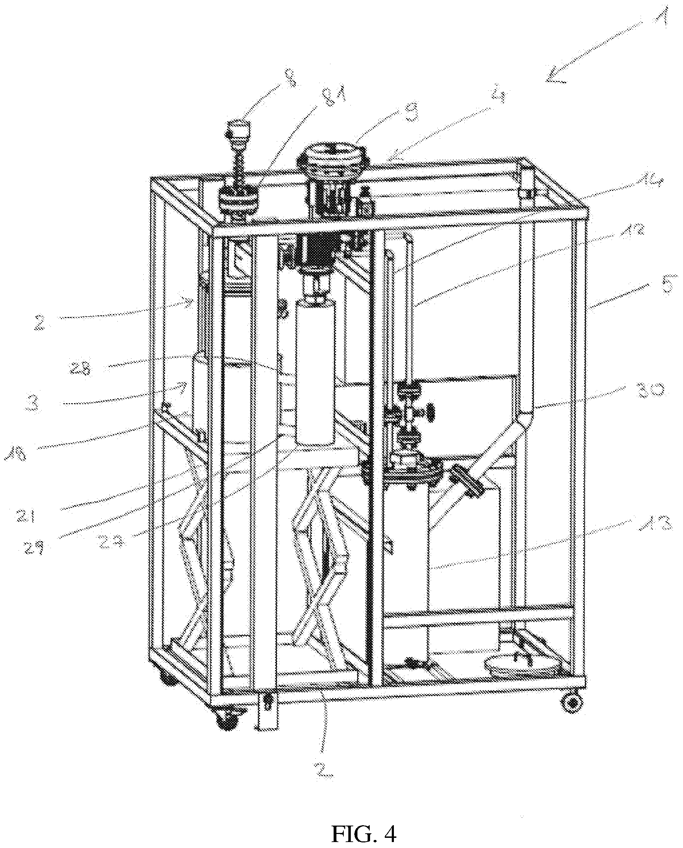

Preferably, as illustrated in Figures 3 and 4, the agitator 24 includes a helix 25 associated with a respective motor 26. The helix 25 is arranged in a container 27 connected to the heat transfer fluid vessel 18 by an inlet pipe 28 and an outlet pipe 29.

As illustrated in Figures 3 and 4, the free end 141 of the second pipe 14 can be inserted in the first vessel 13 containing water. A conduit 30 is connected to the vessel 13 to convey ventilation vapours. The conduit may be provided with an active carbon filter.

Alternatively, the plant can develop horizontally. The vessel containing the heat transfer fluid is substantially closed and is externally associated with a heating element.

The vessel has an opening into which the reaction cell is inserted. The opening is closed by a lid during treatment. The lid is associated with at least one discharge

The vessel has an opening into which the reaction cell is inserted. The opening is closed by a lid during treatment. The lid is associated with at least one discharge pipe and the pressure indicator. The lid may have a transparent portion to check the progress of the process from the outside.

The process for the treatment of medicinal waste according to the invention comprises the steps of:
a) placing at least one medicinal waste material in a reaction cell;
b) for solid medicinal waste, adding a liquid to the reaction cell;
c) uniformly heating at least a portion of the reaction cell until a predetermined pressure value is reached inside the reaction cell;
d) maintaining a constant temperature value of the reaction cell for a predetermined time.

The treatment essentially comprises a hydrothermal carbonisation (HTC) process.

In a preferred embodiment, heating takes place outside of the external surface of the reaction cell 2.

Advantageously, heating is carried out indirectly using a heat transfer fluid, in particular diathermic oil.

In particular, the heat transfer fluid is arranged in a vessel and heated, for example by means of electrical resistors.

The process can be implemented using the plant described above. The plant treats medicinal waste essentially through a hydrothermal carbonisation (HTC) process.

In one embodiment of the process, the vessel 18 is initially placed apart from the reaction cell 2 to allow the medicinal waste to be easily inserted inside the reaction cell 2.

The vessel 18 is then lifted vertically so that the portion of the reaction cell 2 in which the medicinal waste is arranged is immersed in the diathermic oil.

From the control panel 11, the heating of the diathermic oil is activated by means of the heating elements.

To increase the transfer of heat from the diathermic oil to the reaction cell 2, the agitator 24 may be activated.

The oil is heated to a temperature of between around 200°C and around 300°C, preferably around 250°C, resulting in an increase in temperature and pressure in the reaction cell 2.

The pressure in the reaction cell 2 stabilises when the treatment temperature is reached. This treatment temperature is kept constant for a predetermined period. The maximum operating temperature of the reaction cell is between around 200°C and around 250°C.

In particular, the temperature of the reaction cell 2 is measured indirectly by measuring the pressure inside the reaction cell using the pressure sensor 81.

The third temperature sensor placed on the external surface of the reaction cell 2 forms an independent control of the estimated temperature.

The maximum operating pressure of the reaction cell is between around 20 bar and around 30 bar.

In the event that high pressures build up inside the reaction cell (above 30 bar), it is possible to discharge the gases contained therein through the depressurisation valve.

At the end of the treatment cycle, the heating system is lowered and the heat transfer fluid vessel is covered with a lid. The treated medicinal waste can be extracted only after reaching ambient pressure. Finally, at the end of the treatment cycle, the reaction cell can be treated with inert gas.
biomass at relatively low temperature and pressure conditions in the presence of liquid water (pressures of up to around 40 bar and temperatures of up to around 250°C). During the HTC reaction, water, carbon dioxide and other compounds are separated from the biomass to generate - within a timescale of more than 8 hours - a carbonaceous solid, the biocarbon or hydrochar (hereinafter HC). The HTC process simulates the conditions which, in nature, turned plant material into peat or lignite. The starting material for this transformation is usually plant and biological waste from agricultural, industrial and commercial activities, as well as waste from sorted urban waste collection.

The hydrothermal carbonisation process is applied to medicinal waste, from which hydrochar is the product. The medicinal product is removed from the packaging. If the medicinal product is in a solid state, water is preferebly added as a diluent and oxidant to the reaction cell.

In this specific case, the hydrochar obtained at the end of the process is that which is most suitable for agricultural purposes. In particular, an organic soil conditioner usable for optimising soil fertility and water retention in cultivated land is obtained.

The process provides for a phase of depressurising the reaction cell at the end of the treatment. The depressurisation of the reaction cell is followed by a phase of removing the treated product.

The plant advantageously includes an air treatment unit to be activated if harmful gases are generated during the depressurisation of the reaction cell.

Preferably, the plant includes a recirculation system for reprocessing the water resulting from a first treatment of the pharmaceutical. The recirculation system is activated if unreacted substances, such as furans and thiols, are detected in the reprocessing the water resulting from a first treatment of the pharmaceutical. The recirculation system is activated if unreacted substances, such as furans and thiols, are detected in the water.

Advantageously, the process includes the performance of analyses of the product taken from the reaction cell to verify the absence of active ingredients.

Analyses include:
1. "FT-IR" spectroscopy: this enables the follow-up of the degradation kinetics and the progressive transformation of organic into inorganic carbon both on the liquid and on the solid part; and/or
2. Thermo-gravimetric analysis (TGA): for a quantitative analysis of the HC produced, in order to verify the percentage conversion of organic carbon into inorganic carbon; and/or
3. Total Organic Carbon (TOC): for a quantitative analysis of the fraction of organic carbon out of the total carbon present in the HC produced.

If the active ingredient is still present, a new cycle is carried out until the treatment performance improves.

Advantageously, the process requires analyses to be carried out to check for harmful airborne emissions and pollutants in the treatment water.

Analyses include:
1. Gas chromatography-mass spectrometry (GC-MS): to assess the likely presence of Furans/Tiols or other macromolecules or unreacted active ingredients; and/or
2. Determination of PAHs: evaluation of polycyclic aromatic hydrocarbons produced during the hydrothermal carbonisation process that have carcinogenic/mutagenic activity, causing skin or lung cancer; and/or tissues of living organisms, and are therefore considered toxic.

The process and the plant herein disclosed thus enable the on-site treatment of medicinal waste, such as pharmaceutical or cytotoxic waste, vaccines, hyperimmune plasma, etc., by eliminating the risks associated with their handling and final disposal.

In addition, the process herein disclosed enables pharmaceutical waste to be transformed into hydrochar. Therefore, pharmaceutical waste becomes "zero waste"; i.e. it can play a useful role again in terms of the circular economy.

## Claims

1. Plant for the treatment of medicinal waste comprising at least one reaction cell (2) suitable for containing at least one liquid or liquid-diluted medicinal waste material; a heating system (3) suitable for uniformly heating at least one portion (61) of the outer surface of the reaction cell (2); and a device (4) for controlling the pressure and temperature of the reaction cell (2), connected to the heating system (3), **characterised in that** the device (4) controls the value of the pressure of the reaction cell (2) as ranging from 20 bar to 30 bar and the maximum value of the temperature of the reaction cell (2) as 250°C.

2. Plant according to claim 1, **characterised in that** the device (4) controls the value of the temperature of the reaction cell (2) as comprised between 200°C and 250°C.

3. Plant according to claim 1 or 2, **characterised in that** the heating system (3) comprises a vessel (18) containing a heat exchange fluid, which, in use, at least partially surrounds the reaction cell (2), the vessel (18) being associable with a heating element (17).

4. Plant according to claim 3, **characterised in that** the heat exchange fluid is diathermic oil.

5. Plant according to claim 3 or 4, **characterised by** comprising at least one heat exchange fluid temperature sensor (19) connected to the control device (4).

6. Plant according to any one of claims from 3 to 5, **characterised by** comprising an agitator (24) for moving the fluid during heating.

7. Plant according to any one of the claims from 1 to 6, **characterised by** comprising at least one discharge pipe (12) connected to the reaction cell (2).

8. Process for the treatment of medicinal waste, comprising the steps of:
a) placing at least one medicinal waste material in a reaction cell;
b) for solid medicinal waste, adding a liquid to the reaction cell;
c) uniformly heating at least a portion of the reaction cell until a predetermined pressure value, whose value is comprised between 20 bar and 30 bar, is reached inside the reaction cell;
d) maintaining a constant temperature value of the reaction cell, whose maximum value is 250°C, for a predetermined time.

9. Process according to claim 8, characterised on that in step d the constant temperature value ranges between 200°C and 250°C.

10. Process according to claim 8 or 9, **characterised by** comprising a step of heating a heat exchange fluid.

11. Process according to claim 10, characterised on that the heat exchange fluid is diathermic oil.

12. Process according to any one of preceding claims from 8 to 11, **characterised by** including a step of depressurising the reaction cell if the pressure inside the reaction cell exceeds the predetermined value of 30 bar.

13. Process according to any one of previous claims 8 to 12, **characterised by** conveying the gases present inside the reaction cell into at least one container containing a liquid in the depressurisation phase.

14. Process according to any one of preceding claims 8 to 13, **characterised by** uniformly heating at least a portion of the reaction cell until a substantially constant pressure value, comprised between 20 bar and 30 bar, is reached inside the reaction cell.

15. Process according to any one of preceding claims 8 to 14, **characterised by** maintaining the reaction cell at the temperature reached at the moment when the pressure is substantially constant.

## Patentansprüche

1. Anlage zur Verarbeitung medizinischer Abfälle, mindestens eine Reaktionszelle (2), die sich dazu eignet, mindestens ein flüssiges oder mit Flüssigkeit verdünntes Medizinabfallmaterial zu enthalten; ein Heizsystem (3), das dazu geeignet ist, mindestens einen Anteil (61) der Außenfläche der Reaktionzelle (2) gleichmäßig zu erhitzen; und eine Vorrichtung (4) zur Regelung des Drucks und der Temperatur der Reaktionszelle (2), die mit dem Heizsystem (3) verbunden ist, beinhaltend; **dadurch gekennzeichnet, dass** die Vorrichtung (4) den Druckwert der Reaktionszelle (2) auf einen Bereich zwischen 20 bar und 30 bar und den Höchstwert der Temperatur der Reaktionszelle (2) auf 250 °C regelt.

2. Anlage nach dem Patentanspruch 1, **dadurch gekennzeichnet, dass** die Vorrichtung (4) die Temperatur der Reaktionszelle (2) auf einen Wert zwischen einschließlich 200 °C und 250 °C regelt.

3. Anlage nach dem Patentanspruch 1 oder 2, **dadurch gekennzeichnet, dass** das Heizsystem (3) einen Kessel (18) beinhaltet, der dabei eine Wärmeaustauschflüssigkeit enthält, die im Gebrauch die Reaktionszelle (2) zumindest teilweise umgibt, der Kessel (18) ist dabei mit einem Heizelement (17) verbindbar.

4. Anlage nach dem Patentanspruch 3, **dadurch gekennzeichnet, dass** die Wärmeaustauschflüssigkeit Diathermieöl ist.

5. Anlage nach dem Patentanspruch 3 oder 4, **dadurch gekennzeichnet, dass** sie dabei mindestens einen Temperatursensor (19) für die Wärmeaustauschflüssigkeit, der mit der Kontrollvorrichtung (4) verbunden ist, beinhaltet.

6. Anlage nach jedem der Patentansprüche 3 bis 5, **dadurch gekennzeichnet, dass** sie dabei ein Rührwerk (24), um die Flüssigkeit während des Heizens zu bewegen, beinhaltet.

7. Anlage nach jedem der Patentansprüche 1 bis 6, **dadurch gekennzeichnet, dass** sie dabei mindestens ein Abflussrohr (12), das mit der Reaktionszelle (2) verbunden ist, beinhaltet.

8. Verfahren zur Verarbeitung medizinischer Abfälle, folgende Schritte beinhaltend:
a) Mindestens ein Medizinabfallmaterial in einer Reaktionszelle zu platzieren;
b) bei festen Medizinabfällen eine Flüssigkeit zur Reaktionszelle hinzuzufügen;
c) mindestens einen Anteil der Reaktionszelle gleichmäßig zu erhitzen, bis ein vorher festgelegter Druckwert, dessen Wert zwischen einschließlich 20 bar und 30 bar liegt, in der Reaktionszelle erreicht ist;
d) eine konstante Temperatur der Reaktionszelle, deren Höchstwert 250 °C beträgt, über einen vorher festgelegten Zeitraum zu halten.

9. Verfahren nach dem Patentanspruch 8, **dadurch gekennzeichnet, dass** bei Schritt d der konstante Temperaturwert in einem Bereich zwischen 200 °C und 250 °C liegt.

10. Verfahren nach dem Patentanspruch 8 oder 9, **dadurch gekennzeichnet, dass** es dabei einen Schritt des Erhitzens einer Wärmeaustauschflüssigkeit beinhaltet.

11. Verfahren nach dem Patentanspruch 10, **dadurch gekennzeichnet, dass** die Wärmeaustauschflüssigkeit Diathermieöl ist.

12. Verfahren nach jedem der vorherigen Patentansprüche 8 bis 11, **dadurch gekennzeichnet, dass** es dabei einen Schritt des Senkens des Drucks in der Reaktionszelle beinhaltet, wenn der Druck in der Reaktionszelle den vorher festgelegten Druck von 30 bar überschreitet.

13. Verfahren nach jedem der vorherigen Patentansprüche 8 bis 12, **dadurch gekennzeichnet, dass** dabei die Gase, die sich in der Reaktionszelle befinden, in der Drucksenkungsphase in mindestens einen Behälter, der eine Flüssigkeit enthält, geleitet werden.

14. Verfahren nach jedem der vorherigen Patentansprüche 8 bis 13, **dadurch gekennzeichnet, dass** dabei mindestens ein Anteil der Reaktionszelle gleichmäßig erhitzt wird, bis ein im Wesentlichen konstanter Druckwert zwischen einschließlich 20 bar und 30 bar in der Reaktionszelle erreicht ist.

15. Verfahren nach jedem der vorherigen Patentansprüche 8 bis 14, **dadurch gekennzeichnet, dass** dabei die Reaktionszelle auf der Temperatur gehalten wird, die in dem Moment erreicht wurde, in dem der Druck im Wesentlichen konstant ist.

## Revendications

1. Installation pour le traitement de déchets médicaux comprenant au moins une cellule de réaction (2) destinée à contenir au moins un déchet médical liquide ou dilué dans un liquide ; un système de chauffage (3) destiné à chauffer uniformément au moins une portion (61) de la surface extérieure de la cellule de réaction (2) ; et un dispositif (4) pour le contrôle de la pression et de la température de la cellule de réaction (2), relié au système de chauffage (3), **caractérisée en ce que** le dispositif (4) contrôle la valeur de la pression de la cellule de réaction (2) comme étant située dans une plage allant de 20 bar à 30 bar et la valeur maximale de la température de la cellule de réaction (2) comme étant de 250 °C.

2. Installation selon la revendication 1, **caractérisée en ce que** le dispositif (4) contrôle la valeur de la température de la cellule de réaction (2) comme étant comprise entre 200 °C et 250 °C.

3. Installation selon la revendication 1 ou 2, **caractérisée en ce que** le système de chauffage (3) comprend un récipient (18) contenant un fluide d'échange thermique, qui, lors de l'utilisation, entoure au moins partiellement la cellule de réaction (2), le récipient (18) pouvant être associé avec un élément de chauffage (17).

4. Installation selon la revendication 3, **caractérisée en ce que** le fluide d'échange thermique est de l'huile diathermique.

5. Installation selon la revendication 3 ou 4, **caractérisée en ce qu'**elle comprend au moins un capteur de température (19) du fluide d'échange thermique relié au dispositif (4) de contrôle.

6. Installation selon l'une quelconque des revendications de 3 à 5, **caractérisée en ce qu'**elle comprend un agitateur (24) pour déplacer le fluide pendant le chauffage.

7. Installation selon l'une quelconque des revendications de 1 à 6, **caractérisée en ce qu'**elle comprend au moins un conduit d'évacuation (12) raccordé à la cellule de réaction (2).

8. Procédé pour le traitement de déchets médicaux, comprenant les étapes consistant à :
a) placer au moins un déchet médical dans une cellule de réaction ;
b) pour un déchet médical solide, ajouter un liquide dans la cellule de réaction ;
c) chauffer uniformément au moins une portion de la cellule de réaction jusqu'à ce qu'une valeur de pression prédéterminée, dont la valeur est comprise entre 20 bar et 30 bar, soit atteinte à l'intérieur de la cellule de réaction ;
d) maintenir une valeur constante de température de la cellule de réaction, dont la valeur maximale est de 250 °C, pendant un temps prédéterminé.

9. Procédé selon la revendication 8, **caractérisé en ce que**, lors de l'étape d, la valeur constante de température se situe dans la plage allant de 200 °C à 250 °C.

10. Procédé selon la revendication 8 ou 9, **caractérisé en ce qu'**il comprend une étape de chauffage d'un fluide d'échange thermique.

11. Procédé selon la revendication 10, **caractérisé en ce que** le fluide d'échange thermique est de l'huile diathermique.

12. Procédé selon l'une quelconque des revendications précédentes de 8 à 11, **caractérisé en ce qu'**il comprend une étape de dépressurisation de la cellule de réaction si la pression à l'intérieur de la cellule de réaction dépasse la valeur prédéterminée de 30 bar.

13. Procédé selon l'une quelconque des revendications précédentes de 8 à 12, **caractérisé en ce qu'**il prévoit de véhiculer les gaz présents à l'intérieur de la cellule de réaction dans au moins un récipient contenant un liquide lors de l'étape de dépressurisation.

14. Procédé selon l'une quelconque des revendications de 8 à 13, **caractérisé en ce qu'**il prévoit de chauffer uniformément au moins une portion de la cellule de réaction jusqu'à ce qu'une valeur de pression essentiellement constante, comprise entre 20 bar et 30 bar, soit atteinte à l'intérieur de la cellule de réaction.

15. Procédé selon l'une quelconque des revendications de 8 à 14, **caractérisé en ce qu'**il prévoit de maintenir la cellule de réaction à la température atteinte au moment où la pression est essentiellement constante.
